# EUROPEAN PATENT APPLICATION

(11) **EP 4 640 745 A1**
(43) Date of publication of application: **29.10.2025**
(21) Application number: 23907791.0
(22) Date of filing: 21.12.2023
(51) Int. Cl.: C08G 65/26, C08G 64/34

(54) **DOUBLE METAL CYANIDE CATALYST AND METHOD FOR PREPARING SAME**

(30) Priority: 22.12.2022 KR 20220181481; 24.10.2023 KR 20230142951
(71) Applicant: GS Caltex Corporation, Seoul 06141 (KR)
(72) Inventor: KIM, Wookdong, Daejeon 34122 (KR); CHOI, Jisu, Daejeon 34122 (KR); LEE, Su Jeong, Daejeon 34122 (KR); SUH, Hyung Seok, Daejeon 34122 (KR); CHUNG, Sangchul, Daejeon 34122 (KR)
(74) Representative: Kraus & Lederer PartGmbB
(86) International application number: PCT/KR2023/021232
(87) International publication number: WO 2024/136508

(57) **Abstract**

One aspect of the present invention provides a double metal cyanide catalyst having excellent catalytic activity, and a method for preparing same. In particular, the double metal cyanide catalyst according to one aspect is characterized by being prepared using a complexing agent including tert-butanol, a linear or cyclic (C2-C12) aliphatic polyhydric alcohol, and polyalkylene glycol.

## Description

### [Technical Field]

The present invention relates to a double metal cyanide (DMC) catalyst having excellent catalytic activity and a method for preparing the same.

### [Background Art]

A polyether carbonate polyol is widely used as materials such as adhesives, packaging materials, or coating materials, and in particular, is attracting attention as an easily biodegradable polymer material. In addition, preparing a polyether carbonate polyol from a reaction of an epoxide compound and carbon dioxide does not use a toxic compound and is an environmentally friendly preparation method using greenhouse gas, and a study of developing a catalyst applicable to the reaction continues.

Meanwhile, the double metal cyanide (DMC) catalyst is a catalyst used for polymerizing polymer products such as polyether, polyether, and polyetherester polyol. The DMC catalyst has an advantage of preparing higher quality polymer products having a low unsaturated degree and a high molecular weight as compared with using a conventionally used basic catalyst.

However, when the DMC catalyst is applied to a method for preparing a polyether carbonate polyol from a reaction of an epoxide compound and carbon dioxide, there are limitations in that catalytic activity is still insufficient, a relatively large amount of catalyst is used, and a process of removing a catalyst residue remaining after a polymerization reaction is needed. In addition, when the amount of catalyst used is intended to be decreased, a polymerization reaction time becomes longer, the quality of a polymer product is deteriorated, and thus, productivity is reduced and there is a difficulty in commercialization.

### [Disclosure]

### [Technical Problem]

An object of the present invention is to provide a double metal cyanide catalyst having excellent catalytic activity in a polymerization reaction of a polyether carbonate polyol and a method for preparing the same.

Another object of the present invention is to provide a method for preparing a high-quality polyether carbonate polyol using the double metal cyanide catalyst.

### [Technical Solution]

In one general aspect, a composition for a double metal cyanide catalyst includes: tert-butanol; a linear or cyclic (C2-C12) aliphatic polyhydric alcohol; and polyalkylene glycol as a complexing agent.

The complexing agent may include the tert-butanol and the aliphatic polyhydric alcohol at a mole ratio of 1:0.1 to 0.9.

The aliphatic polyhydric alcohol may be diol or triol.

The aliphatic polyhydric alcohol may be 1,2-diol, 1,3-diol, or 1,2,3-triol.

The aliphatic polyhydric alcohol may be one or two or more selected from ethylene glycol, propylene glycol, 1,3-propanediol, glycerol, 1,3-butanediol, 1,2-butanediol, 2,3-butanediol, 3-amino-1,2-propanediol, 1,2-cyclohexanediol, and 1,2-cyclopentadiol.

The composition for a double metal cyanide catalyst may include a metal salt of the following Chemical Formula 1 and a metal cyanide complex salt of the following Chemical Formula 2:

[Chemical Formula 1] M¹(X¹)ₚ

[Chemical Formula 2] A¹_{q}M²M³ᵣ(CN)₆

wherein
M¹ is a Group 11 or 12 transition metal ion;
X¹ is a halogen, a hydroxyl group, a sulfate group, a carbonate group, a carboxylate group, an oxalate group, or a cyanide group;
A¹ is an alkali metal ion or alkaline earth metal ion;
M² and M³ are different from each other and an alkaline earth metal ion or a Group 8, 9, or 10 transition metal ion; and
p and q are independently of each other an integer of 1 or more, and r is 0 or 1.
M¹ may be Zn(II), Fe(II), Co(II), or Ni(II); and X¹ may be a halogen.

The metal salt may be zinc chloride(II), zinc chloride(III), zinc bromide, or zinc iodide.

M² and M³ may be independently of each other Ca(II), Co(II), Co(III), Fe(II), Fe(III), Cr(II), Ir(III), or Ni(II).

The metal cyanide complex salt may be potassium hexacyanocobaltate(III), potassium hexacyanoferrate(III), or potassium calcium ferrocyanide.

In another general aspect, a double metal cyanide catalyst prepared from the composition for a double metal cyanide catalyst is provided.

In another general aspect, a method for preparing a double metal cyanide catalyst includes: (a) preparing a composition for a double metal cyanide catalyst including a complexing agent including tert-butanol, a linear or cyclic (C2-C12) aliphatic polyhydric alcohol, and polyalkylene glycol, a metal salt of the following Chemical Formula 1, and a metal cyanide complex salt of the following Chemical Formula 2 and reacting the composition; and (b) performing filtration and washing to obtain a double metal cyanide catalyst:

[Chemical Formula 1] M¹(X¹)ₚ

[Chemical Formula 2] A¹_{q}M²M³ᵣ(CN)₆

wherein
X¹, M¹, M², M³, A¹, and p to r are as defined above.

In still another general aspect, a method for preparing a polyether carbonate polyol includes: (a) preparing a composition for a double metal cyanide catalyst including a complexing agent including tert-butanol, a linear or cyclic (C2-C12) aliphatic polyhydric alcohol, and polyalkylene glycol, a metal salt of the following Chemical Formula 1, and a metal cyanide complex salt of the following Chemical Formula 2 and reacting the composition; (b) performing filtration and washing to obtain a double metal cyanide catalyst; and (c) reacting alkylene oxide and carbon dioxide in the presence of the double metal cyanide catalyst to obtain a polyether carbonate polyol:

[Chemical Formula 1] M¹(X¹)ₚ

[Chemical Formula 2] A¹_{q}M²M³ᵣ(CN)₆

wherein
X¹, M¹, M², M³, A¹, and p to r are as defined above.

The polyether carbonate polyol may have a number average molecular weight of 200 to 10,000 g/mol.

In step (c), a catalytic activity degree calculated as a ratio of a weight (kg-P) of a produced polyol to a use amount (g-cat) of the double metal cyanide catalyst used based on a polymerization time (h) may be 40 kg-P/g-cat.h.

### [Advantageous Effects]

Since the double metal cyanide catalyst according to an exemplary embodiment includes tert-butanol and a linear or cyclic (C2-C12) aliphatic polyhydric alcohol as a complexing agent, very significantly improved catalytic activity may be implemented.

Specifically, when the double metal cyanide catalyst according to an exemplary embodiment is applied to a polyether carbonate polyol polymerization reaction, a high-quality polymer may be prepared only with a very small amount of catalyst. In addition, since there is almost no residual amount of the catalyst after the polymerization reaction, a process of removing the catalyst is not further needed to allow simplification of the process, and a high-quality polyether carbonate polyol may be obtained even under mild reaction conditions, thereby significantly improving productivity.

### [Best Mode]

In the present specification, unless otherwise defined, all technical terms and scientific terms have the same meanings as those commonly understood by a person skilled in the art to which the present invention pertains. The terms used herein are only for effectively describing a certain specific example and are not intended to limit the present invention.

The singular form used in the present specification may be intended to also include a plural form, unless otherwise indicated in the context.

In addition, the numerical range used in the present specification includes all values within the range including the lower limit and the upper limit, increments logically derived in a form and span of a defined range, all double limited values, and all possible combinations of the upper limit and the lower limit in the numerical range defined in different forms. Unless otherwise defined in the present specification, values which may be outside a numerical range due to experimental error or rounding off of a value are also included in the defined numerical range.

The term "comprise" of the present specification is an open-ended description having a meaning equivalent to the term such as "is/are provided", "contain" "have", or "is/are have", or "is/are characterized", and does not exclude elements, materials or processes which are not further listed.

Hereinafter, the present invention will be described in detail.

An exemplary embodiment of the present invention provides a double metal cyanide catalyst having excellent catalytic activity in a polymerization method of a polyether carbonate polyol, and a method for preparing the same.

Specifically, a composition for a double metal cyanide catalyst according to an exemplary embodiment is characterized by including tert-butanol; a linear or cyclic (C2-C12) aliphatic polyhydric alcohol; and polyalkylene glycol as a complexing agent.

Since the complexing agent having the composition combination as described above is used, the double metal cyanide catalyst according to an exemplary embodiment may produce a high-quality polymer only with a very small amount in a polyether carbonate polyol polymerization reaction.

As an example, the complexing agent may include the tert-butanol and the aliphatic polyhydric alcohol at a mole ratio of 1:0.1 to 0.9, specifically at a mole ratio of 1:0.2 to 1:0.8 or at a mole ratio of 1:0.2 to 1:0.6. When the range described above is satisfied, a double metal cyanide catalyst having better catalytic activity may be prepared, which is thus preferred, but the present invention is not limited thereto.

The linear or cyclic (C2-C12) aliphatic polyhydric alcohol may be, for example, a linear (C2-C12) aliphatic polyhydric alcohol or a cyclic (C3-C10) aliphatic polyhydric alcohol. Specifically, it may be a linear or cyclic (C3-C8) aliphatic polyhydric alcohol or a (C3-C6) aliphatic polyhydric alcohol and may be a linear or cyclic aliphatic compound including 2 or more, specifically 2 to 4 hydroxyl groups (-OH).

The aliphatic polyhydric alcohol may be a diol or triol, and as a non-limiting example, may be one or two or more selected from ethylene glycol, propylene glycol, 1,3-propanediol, glycerol, 1,4-butanediol, 1,3-butanediol, 1,2-butanediol, 2,3-butanediol, 3-amino-1,2-propanediol, 1,2-cyclohexanediol, and 1,2-cyclopentadiol.

The aliphatic polyhydric alcohol may be 1,2-diol, 1,3-diol, or 1,2,3-triol, preferably 1,2-diol.

Herein, the 1,2-diol refers to a vicinal diol in which two hydroxyl groups are positioned at adjacent carbon atoms as in the following Chemical Formula A, and as a non-limiting example, may be ethylene glycol, propylene glycol, 1,2-butanediol, 2,3-butanediol, 3-amino-1,2-propanediol, 1,2-cyclohexanediol, 1,2-cyclopentanediol, and the like:

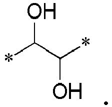

The 1,3-diol refers to a compound in which 2 hydroxyl groups are positioned on carbon atoms at positioned 1 and 3 as in the following Chemical Formula B, and as a non-limiting example, may be 1,3-propanediol, 1,3-butanediol, and the like:

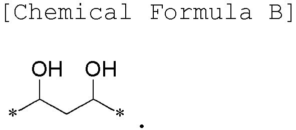

The 1,2,3-triol refers to a compound in which 3 hydroxyl groups are positioned at 3 carbon atoms adjacent to each other as in the following Chemical Formula C, and as a non-limiting example, may be glycerol:

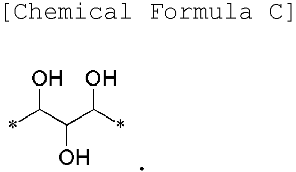

The polyalkylene glycol may be a polymer compound having a number average molecular weight of 400 g/mol or more, specifically 400 to 5,000 g/mol, 400 to 3,000 g/mol, or 400 to 2,000 g/mol. In addition, the polyalkylene glycol may be polyethylene glycol, polypropylene glycol, or polybutylene glycol, but is not limited thereto. Specifically, the composition for a double metal cyanide catalyst according to an exemplary embodiment may include the complexing agent described above, a metal salt, and a metal cyanide complex salt, the metal salt is represented by the following Chemical Formula 1, and the metal cyanide complex salt may be represented by the following Chemical Formula 2:

[Chemical Formula 1] M¹(X¹)ₚ

[Chemical Formula 2] A¹_{q}M²M³ᵣ(CN)₆

wherein
M¹ is a Group 11 or 12 transition metal ion;
X¹ is a halogen, a hydroxyl group, a sulfate group, a carbonate group, a carboxylate group, an oxalate group, or a cyanide group;
A¹ is an alkali metal ion or alkaline earth metal ion;
M² and M³ are different from each other and an alkaline earth metal ion or a Group 8, 9, or 10 transition metal ion; and
p and q are independently of each other an integer of 1 or more, and r is 0 or 1.

In Chemical Formula 1, p may be the charge value of M¹; M¹ may be Zn, Fe, Co, or Ni; and X¹ may be a halogen. Specifically, the metal salt represented by Chemical Formula 1 may be zinc chloride (II) (ZnCl₂), zinc chloride(III) (ZnCl₃), zinc bromide (ZnBr₂), or zinc iodide (ZnI₂), more specifically zinc chloride(II).

In Chemical Formula 2, when r is 0, q may be 6-(charge value of M²); when r is 1, q may be 6-(charge value of M²+charge value of M³); M² and M³ may be independently of each other Ca(II), Co(II), Co(III), Fe(II), Fe(III), Cr(II), Ir(III), or Ni(II); and A¹ may be an alkali metal ion. Specifically, the metal cyanide complex salt represented by Chemical Formula 2 may be potassium hexacyanocobaltate(III) (K₃Co(CN)₆), potassium hexacyanoferrate (III) (K₃Fe(CN)₆), or potassium calcium ferrocyanide (K₂CaFe(CN)₆), and specifically potassium hexacyanocobaltate (III) (K₃Co(CN)₆) or potassium hexacyanoferrate (III) (K₃Fe(CN)₆).

Another exemplary embodiment of the present invention provides a method for preparing a double metal cyanide catalyst.

The method for preparing a double metal cyanide catalyst according to an exemplary embodiment may include:
(a) preparing a composition for a double metal cyanide catalyst including: a complexing agent including tert-butanol, a linear or cyclic (C2-C12) aliphatic polyhydric alcohol, and polyalkylene glycol; a metal salt of the following Chemical Formula 1; and a metal cyanide complex salt of the following Chemical Formula 2 and reacting the composition; and
(b) performing filtration and washing to obtain a double metal cyanide catalyst:

   [Chemical Formula 1] M¹(X¹)ₚ

   [Chemical Formula 2] A¹_{q}M²M³ᵣ(CN)₆

   wherein X¹, M¹, M², M³, A¹, and p to r are as described above.

Since the description of the linear or cyclic (C2-C12) aliphatic polyhydric alcohol, the polyalkylene glycol, the metal salt, and the metal cyanide complex salt are as described above, they will be omitted.

Specifically, the reaction of step (a) may be performed at 30 to 100°C, 30 to 80°C, or 40 to 60°C for 30 minutes to 2 hours or 1 hour to 2 hours.

In step (b), an aqueous solution including tert-butanol and polyalkylene glycol may be used as a wash solution, and the solvent may be dried under reduced pressure after washing to obtain a double metal cyanide catalyst. The drying may be performed at 50 to 100°C, 70 to 100°C, or 80 to 100°C for 1 hour to 10 hours, 3 hours to 10 hours, or 5 hours to 20 hours.

In addition, another exemplary embodiment of the present invention provides a double metal cyanide catalyst prepared from the preparation method as described above, and provides a method for preparing a polyether carbonate polyol, including reacting alkylene oxide and carbon dioxide in the presence of the double metal cyanide catalyst to obtain a polyether carbonate polyol.

Specifically, the method for preparing a polyether carbonate polyol according to an exemplary embodiment may include: (a) preparing an aqueous solution including a complexing agent including tert-butanol, a linear or cyclic (C2-C12) aliphatic polyhydric alcohol, and polyalkylene glycol, a metal salt of the following Chemical Formula 1, and a metal cyanide complex salt of the following Chemical Formula 2 and reacting the solution; (b) performing filtration and washing to obtain a double metal cyanide catalyst; and (c) reacting alkylene oxide and carbon dioxide in the presence of the double metal cyanide catalyst to obtain a polyether carbonate polyol:

[Chemical Formula 1] M¹(X¹)ₚ A¹_{q}M²M³ᵣ(CN)₆

wherein
X¹, M¹, M², M³, A¹, and p to r are as described above.

The double metal cyanide catalyst according to an exemplary embodiment has excellent catalytic activity and may eliminate a catalyst removal step. Specifically, when the double metal cyanide catalyst according to an exemplary embodiment is used, a high-quality polyether carbonate polyol may be prepared only with the use of a very small amount of catalyst. In addition, since there is almost no residual amount of the catalyst after the polymerization reaction, a process of removing the catalyst is not further needed to allow simplification of the process, and a high-quality polyether carbonate polyol may be obtained even under mild reaction conditions, thereby significantly improving productivity.

Specifically, in step (c), the double metal cyanide catalyst may be used at 400 ppm or less, 300 ppm or less, 200 ppm or less, 100 ppm or less, or 50 ppm or less, specifically 10 to 400 ppm, 50 to 300 ppm, or 100 to 300 ppm, based on the weight of the finally produced polyether carbonate polyol, and may include all possible combinations of the upper limit and the lower limit of the numerical ranges.

In addition, the double metal cyanide catalyst may be used at 0.001 to 0.1 parts by weight or 0.001 to 0.05 parts by weight, based on 100 parts by weight of the alkylene oxide.

In step (c), alkylene oxide may be ethylene oxide or propylene oxide, and the reaction of alkylene oxide and carbon dioxide may be performed at 50 to 200°C, 70 to 200°C, or 80 to 150°C.

In addition, the reaction of step (c) may be performed by further including a chain transfer agent in alkylene oxide and carbon dioxide, and the chain transfer agent is not limited as long as it is commonly used in the art, but as a non-limiting example, it may be polyalkylene glycol, more specifically, polyalkylene glycol, polypropylene glycol, or polybutylene glycol, but is not limited thereto. In addition, the polyalkylene glycol used as the chain transfer agent may have a number average molecular weight of 50 to 2,000 g/mol, 50 to 1,000 g/mol, 100 to 1,000 g/mol, or 100 to 500 g/mol, but is not particularly limited thereto.

A catalytic activity degree calculated as a ratio of a weight (kg-P) of a produced polyol to a use amount (g-cat) of the used double metal cyanide catalyst, based on a polymerization time (h) under the polymerization conditions described above may be 1 to 40 kg-P/g-cat.h or 3 to 40 kg-P/g-cat.h.

The polyether carbonate polyol obtained by the preparation method may have a number average molecular weight of 200 to 10,000 g/mol, 200 to 5,000 g/mol, 300 to 5,000 g/mol, or 400 to 3,000 g/mol, but is not necessarily limited thereto.

Hereinafter, the exemplary embodiments described above will be described in detail through the following examples. However, the following examples are only for description, and do not limit the scope of a right.

The physical properties of the examples were measured as follows:

### 1) Molecular weight and dispersion degree

They were analyzed using gel permeation chromatography (GPC). The analysis was performed in an Agilent 1260 Infinity II high temperature GPC instrument using polystyrene as a standard material, tetrahydrofuran as a solvent, and PSS SDV 500A° 3 um 8×300 mm from Agilent as a column at a temperature of 40°C.

### 2) Catalytic activity

Catalytic activity was calculated as a ratio of the weight (kg-P) of a produced polyether carbonate polyol to the use amount (g-cat) of the used double metal cyanide catalyst, based on a polymerization time (h) The unit is kg-P/g-cat.h.

### [Example 1]

### Preparation of double metal cyanide catalyst (DMC)

Tert-butyl alcohol and 2,3-butanediol were used at a mole ratio of 1:0.5 as a complexing agent to prepare the double metal cyanide catalyst of Example 1.

Specifically, 6.5 g of ZnCl₂, 3.4 g of tert-butyl alcohol, and 2.1 g of 2,3-butanediol were dissolved in 24.0 g of distilled water. 0.65 g of K₃Co(CN)₆ was dissolved in 8.0 g of distilled water in another reaction vessel, the mixed solution was added dropwise to the ZnCl₂ solution for 10 minutes with stirring, and after the addition, a mixed solution of 0.14 g of tert-butyl alcohol and 0.69 g of polypropylene glycol (molecular weight: 1000 g/mol) dissolved in 6.5 g of distilled water was further added dropwise for 10 minutes to prepare a composition for a double metal cyanide catalyst. After the addition, the reaction was further performed while stirring for 90 minutes. The entire reaction was performed at 50°C. Thereafter, a product in a white slurry form was filtered to obtain a white solid product, the product was dispersed in a mixed solvent of 15 g of distilled water, 29 g of tert-butyl alcohol, and 0.6 g of polypropylene glycol (molecular weight: 1,000 g/mol), washing was performed with stirring, and filtration was performed. The washing process was repeated twice. Next, a white product was dispersed in 40 g of tert-butyl alcohol, stirred for 20 minutes, and then filtered to obtain a white product. Next, the solvent was removed at 60°C for 8 hours under reduced pressure to obtain the double metal cyanide catalyst of Example 1.

### Preparation of polyether carbonate polyol

6.0 mg of the DMC catalyst of Example 1 obtained above, 20 g of propylene oxide, and 50 g of polypropylene glycol (molecular weight: 400 g/mol) as a chain transfer agent were added to a 600 mL reactor, and stirring was performed. The reactor was heated to 110°C to polymerize propylene oxide. An internal temperature rise was observed, and then when internal pressure was decreased to 1 bar, the reactor was cooled to room temperature. Thereafter, 150 g of propylene oxide was added to a reactor, carbon dioxide gas was pressurized to 18 bar, and the reactor was heated to 115°C. It was confirmed that pressure in the reactor was decreased while the polymerization reaction proceeded, and when the pressure dropped to 35 bar, the polymerization reaction was completed. After the reaction was completed, the reactor was cooled using an ice bath, and carbon dioxide gas in the reactor was all discharged. The product was dried in a vacuum oven at 80°C. The physical properties of the product are described in the following Table 1, and the CO₂ content in the obtained polyether carbonate polyol was measured by the method described in Korean Patent Laid-Open Publication No. 10-2022-0111266A.

### [Example 2]

The process was performed in the same manner as in Example 1, except that when preparing the composition for a DMC catalyst, the total use amount of tert-butyl alcohol and 2,3-butanediol was the same, but the mole ratio was changed from 1:0.5 to 1:0.2.

### [Example 3]

The process was performed in the same manner as in Example 1, except that when preparing the composition for a DMC catalyst, propylene glycol was used instead of 2,3-butanediol.

### [Example 4]

The process was performed in the same manner as in Example 1, except that when preparing the composition for a DMC catalyst, 1,2-cyclohexanediol was used instead of 2,3-butanediol.

### [Example 5]

The process was performed in the same manner as in Example 1, except that when preparing the composition for a DMC catalyst, the total use amount of tert-butyl alcohol and 2,3-butanediol was the same, but the mole ratio was changed from 1:0.5 to 1:1.0.

### [Example 6]

The process was performed in the same manner as in Example 1, except that when preparing the composition for a DMC catalyst, 1,3-propanediol was used instead of 2,3-butanediol.

### [Example 7]

The process was performed in the same manner as in Example 1, except that when preparing the composition for a DMC catalyst, 3-amino-1,2-propanediol was used instead of 2,3-butanediol.

### [Comparative Example 1]

The process was performed in the same manner as in Example 1, except that when preparing the composition for a DMC catalyst, 2,3-butanediol was not used.

**[Table 1]**

| | Catalytic activity (kg-P/g-cat.h) | Polyether carbonate polyol | | |
|---|---|---|---|---|
| | | CO₂ content (wt%) | Mₙ(g/mol) | PDI |
| Example 1 | 33.2 | 13.8 | 1,899 | 2.01 |
| Example 2 | 31.2 | 13.5 | 1,937 | 1.94 |
| Example 3 | 24.7 | 13.6 | 1,913 | 2.10 |
| Example 4 | 30.6 | 13.5 | 1,941 | 1.86 |
| Example 5 | 17.9 | 14.7 | 1,905 | 2.11 |
| Example 6 | 25.5 | 13.7 | 1,929 | 2.03 |
| Example 7 | 5.1 | 14.1 | 1,794 | 2.49 |
| Comparative Example 1 | 26.4 | 12.7 | 1,913 | 1.84 |

As shown in Table 1, it was found that the DMC catalyst according to examples of the present invention implemented very significantly improved catalytic activity, and thus, it was confirmed that a high-quality polymer was prepared only with the use of a very small amount of catalyst. In addition, according to an exemplary embodiment of the present invention, since there was almost no residual amount of the catalyst after the polymerization reaction (about 50 ppm or less), a process of removing the catalyst was not further needed to allow simplification of the process, and a high-quality polyether carbonate polyol was able to be obtained even under mild reaction conditions, so that productivity is expected to be significantly improved.

Hereinabove, although the present invention has been described by specified matters and specific exemplary embodiments, they have been provided only for assisting in the entire understanding of the present invention, and the present invention is not limited to the exemplary embodiments. Various modifications and changes may be made by those skilled in the art to which the present invention pertains from the description.

Therefore, the spirit of the present invention should not be limited to the above-described exemplary embodiments, and the following claims as well as all modifications equal or equivalent to the claims are intended to fall within the scope and spirit of the invention.

## Claims

1. A composition for a double metal cyanide catalyst comprising: tert-butanol; a linear or cyclic (C2-C12) aliphatic polyhydric alcohol; and polyalkylene glycol; as a complexing agent.

2. The composition for a double metal cyanide catalyst of claim 1, wherein the complexing agent includes the tert-butanol and the aliphatic polyhydric alcohol at a mole ratio of 1:0.1 to 0.9.

3. The composition for a double metal cyanide catalyst of claim 1, wherein the aliphatic polyhydric alcohol is diol or triol.

4. The composition for a double metal cyanide catalyst of claim 3, wherein the aliphatic polyhydric alcohol is 1,2-diol, 1,3-diol, or 1,2,3-triol.

5. The composition for a double metal cyanide catalyst of claim 4, wherein the aliphatic polyhydric alcohol is one or two or more selected from ethylene glycol, propylene glycol, 1,3-propanediol, glycerol, 1,3-butanediol, 1,2-butanediol, 2,3-butanediol, 3-amino-1,2-propanediol, 1,2-cyclohexanediol, and 1,2-cyclopentadiol.

6. The composition for a double metal cyanide catalyst of claim 1, wherein the composition for a double metal cyanide catalyst includes a metal salt of the following Chemical Formula 1 and a metal cyanide complex salt of the following Chemical Formula 2:
[Chemical Formula 1] M¹(X¹)ₚ
[Chemical Formula 2] A¹_{q}M²M³ᵣ(CN)₆
wherein
M¹ is a Group 11 or 12 transition metal ion;
X¹ is a halogen, a hydroxyl group, a sulfate group, a carbonate group, a carboxylate group, an oxalate group, or a cyanide group;
A¹ is an alkali metal ion or alkaline earth metal ion;
M² and M³ are different from each other and an alkaline earth metal ion or a Group 8, 9, or 10 transition metal ion; and
p and q are independently of each other an integer of 1 or more, and r is 0 or 1.

7. The composition for a double metal cyanide catalyst of claim 6, wherein M¹ is Zn(II), Fe(II), Co(II), or Ni(II); and X¹ is a halogen.

8. The composition for a double metal cyanide catalyst of claim 6, wherein the metal salt is zinc chloride (II), zinc chloride(III), zinc bromide, or zinc iodide.

9. The composition for a double metal cyanide catalyst of claim 6, wherein M² and M³ are independently of each other Ca(II), Co(II), Co(III), Fe(II), Fe(III), Cr(II), Ir(III), or Ni(II).

10. The composition for a double metal cyanide catalyst of claim 6, wherein the metal cyanide complex salt is potassium hexacyanocobaltate(III), potassium hexacyanoferrate(III), or potassium calcium ferrocyanide.

11. A double metal cyanide catalyst prepared from the composition for a double metal cyanide catalyst of any one of claims 1 to 10.

12. A method for preparing a double metal cyanide catalyst, the method comprising:
(a) preparing a composition for a double metal cyanide catalyst including a complexing agent including tert-butanol, a linear or cyclic (C2-C12) aliphatic polyhydric alcohol, and polyalkylene glycol, a metal salt of the following Chemical Formula 1, and a metal cyanide complex salt of the following Chemical Formula 2 and reacting the composition; and
(b) performing filtration and washing to obtain a double metal cyanide catalyst:
[Chemical Formula 1] M¹(X¹)ₚ
[Chemical Formula 2] A¹_{q}M²M³r(CN)₆
wherein
X¹, M¹, M², M³, A¹, and p to r are as defined in claim 6.

13. A method for preparing a polyether carbonate polyol, the method comprising:
(a) preparing a composition for a double metal cyanide catalyst including a complexing agent including tert-butanol, a linear or cyclic (C2-C12) aliphatic polyhydric alcohol, and polyalkylene glycol, a metal salt of the following Chemical Formula 1, and a metal cyanide complex salt of the following Chemical Formula 2 and reacting the composition;
(b) performing filtration and washing to obtain a double metal cyanide catalyst: and
(c) reacting alkylene oxide and carbon dioxide in the presence of the double metal cyanide catalyst to obtain a polyether carbonate polyol:
[Chemical Formula 1] M¹(X¹)ₚ
[Chemical Formula 2] A¹_{q}M²M³ᵣ(CN)₆
wherein
X¹, M¹, M², M³, A¹, and p to r are as defined in claim 6.

14. The method for preparing a polyether carbonate polyol of claim 13, wherein the polyether carbonate polyol has a number average molecular weight of 200 to 10,000 g/mol.

15. The method for preparing a polyether carbonate polyol of claim 13, wherein a catalytic activity degree calculated as a ratio of a weight (kg-P) of a produced polyol to a use amount (g-cat) of the double metal cyanide catalyst used based on a polymerization time (h) in (c) is 1 to 40 kg-P/g-cat.h.
